# EUROPEAN PATENT APPLICATION

(11) **EP 4 848 863 A1**
(43) Date of publication of application: **02.12.2026**
(21) Application number: 24921416.4
(22) Date of filing: 05.09.2024
(51) Int. Cl.: H04W 72/23, H04W 72/0453, H04L 5/00

(54) **SIGNAL TRANSMISSION METHODS, APPARATUSES, AND STORAGE MEDIUM**

(30) Priority: 29.01.2024 CN 202410123615
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); CHEN, Mengzhu, Shenzhen, Guangdong 518057 (CN); HU, Youjun, Shenzhen, Guangdong 518057 (CN); BIAN, Luanjian, Shenzhen, Guangdong 518057 (CN)
(74) Representative: Vossius & Partner Patentanwälte Rechtsanwälte mbB
(86) International application number: PCT/CN2024/117103
(87) International publication number: WO 2025/161391

(57) **Abstract**

Embodiments of the present disclosure provide a signal transmission method, a device, and a storage medium. The signal transmission method comprises: receiving a first signal and/or an excitation signal; transmitting a second signal based on the first signal and/or the excitation signal.

## Description

The present disclosure claims priority to Chinese patent application No. 202410123615.7 filed on January 29, 2024, the disclosure of which is herein incorporated by reference in its entirety.

### FIELD

The present disclosure relates to the field of communication technologies, and specifically to a signal transmission method, a device, and a storage medium.

### BACKGROUND

In order to achieve the Internet of Everything, it is necessary to introduce the ambient internet of things (Ambient IoT). The Ambient IoT might employ new technologies such as backscatter communication and energy harvesting. The backscatter communication is a communication manner of transmitting data by reflecting an excitation signal.

### SUMMARY

In one aspect, there is provided a signal transmission method, applied to a first node. The signal transmission method comprises:
receiving a first signal and/or an excitation signal; and
transmitting a second signal based on the first signal and/or the excitation signal.

In another aspect, there is provided a signal transmission method, applied to a second node. The signal transmission method comprises:
transmitting a first signal and/or an excitation signal to a first node; and
receiving a second signal transmitted by the first node in response to the first signal and/or the excitation signal.

In yet another aspect, there is provided a communication device. The communication device comprises: a receiving module and a transmitting module; wherein
the receiving module is configured to receive a first signal and/or an excitation signal; and
the transmitting module is configured to transmit a second signal based on the first signal and/or the excitation signal.

In yet another aspect, there is provided a communication device. The communication device comprises: a processor and a memory for storing processor-executable instructions; wherein the processor is configured to execute the instructions to cause the communication device to perform the signal transmission method according to any of the above aspects.

In yet another aspect, there is provided a computer-readable storage medium having computer program instructions stored thereon, which, when executed by a processor, implement the signal transmission method according to any of the above aspects.

In yet another aspect, there is provided a computer program product comprising computer program instructions, which, when executed by a processor, implement the signal transmission method according to any of the above aspects.

### BRIEF DESCRIPTION OF THE DRAWINGS

To illustrate technical solutions in the present disclosure more clearly, the accompanying drawings to be used in some embodiments of the present disclosure will be briefly introduced below. Apparently, the drawings described below are only drawings of some embodiments of the present disclosure, and those having ordinary skill in the art may also derive other drawings from these drawings.
FIG. 1 illustrates a schematic diagram of an architecture of a communication system according to some embodiments of the present disclosure.
FIG. 2 illustrates a flowchart illustrating a signal transmission method according to some embodiments of the present disclosure.
FIG. 3 illustrates a schematic diagram of a signal distribution according to some embodiments of the present disclosure.
FIG. 4 illustrate a schematic diagram of another signal distribution according to some embodiments of the present disclosure.
FIG. 5 illustrates a schematic diagram of yet another signal distribution according to some embodiments of the present disclosure.
FIG. 6 illustrates a schematic diagram of yet another signal distribution according to some embodiments of the present disclosure.
FIG. 7 illustrates a schematic diagram of yet another signal distribution according to some embodiments of the present disclosure.
FIG. 8 illustrates a schematic diagram of yet another signal distribution according to some embodiments of the present disclosure.
FIG. 9 illustrates a schematic diagram of yet another signal distribution according to some embodiments of the present disclosure.
FIG. 10 illustrates a schematic diagram of yet another signal distribution according to some embodiments of the present disclosure.
FIG. 11 illustrates a schematic diagram of yet another signal distribution according to some embodiments of the present disclosure.
FIG. 12 illustrates a flowchart illustrating another signal transmission method according to some embodiments of the present disclosure.
FIG. 13 illustrates a schematic structural diagram of a communication device according to some embodiments of the present disclosure.
FIG. 14 illustrates a schematic structural diagram of another communication device according to some embodiments of the present disclosure.
FIG. 15 illustrates a schematic structural diagram of a communication device according to some embodiments of the present disclosure.

### DETAILED DESCRIPTION

In order to enable those skilled in the art to better understand the technical solutions of the embodiments of the present disclosure, the technical solutions in the present disclosure will be clearly and completely described below with reference to the accompanying drawings in the present disclosure. Apparently, the described embodiments are only part of the embodiments of the present disclosure, not all of them. Based on the embodiments in the present disclosure, all other embodiments obtained by those having ordinary skill in the art without making creative efforts shall fall within the protection scope of the present disclosure.

It needs to be appreciated that in the present disclosure, words such as "exemplarily" or "for example" are used to indicate an example, an illustration, or an explanation. Any embodiment or design described with the words "exemplarily" or "for example" in the present disclosure should not be construed as being more preferred or advantageous than other embodiments or designs. More precisely, the use of words such as "exemplarily" or "for example" is intended to present a related concept in a concrete manner.

Hereinafter, terms such as "first" and "second" are used for descriptive purposes only and should not be understood as indicating or implying relative importance or implicitly indicating the number of indicated technical features. Thus, features defined with the terms such as "first", "second" may explicitly or implicitly include one or more of those features.

In the description of the present disclosure, unless otherwise specified, "/" means "or", for example, A/B may represent A or B. "And/or" herein is merely an association relationship describing associated objects, indicating that three relationships may exist, e.g., A and/or B may mean: only A, only B, and both A and B. In addition, "at least one" means one or more, and "a plurality of' means two or more.

In the Ambient IoT, devices communicate wirelessly with a base station to transmit data to the network. Since some devices needn't be powered by a battery, they may obtain the required energy such as vibration energy or ambient light energy through an energy harvesting technology, and communicate with other devices using a technology such as backscatter communication, which enables Ambient IoT devices to have very low power consumption and thus a very long service life. The backscatter communication is a communication manner of transmitting data by reflecting an excitation signal.

In the embodiments of the present disclosure, the network architecture of a communication network (including but not limited to 3G, 4G, 5G, and future mobile communication networks) may include a first node (e.g., including but not limited to a terminal or a passive device) and a second node (e.g., including but not limited to a terminal, a relay device, or a base station).

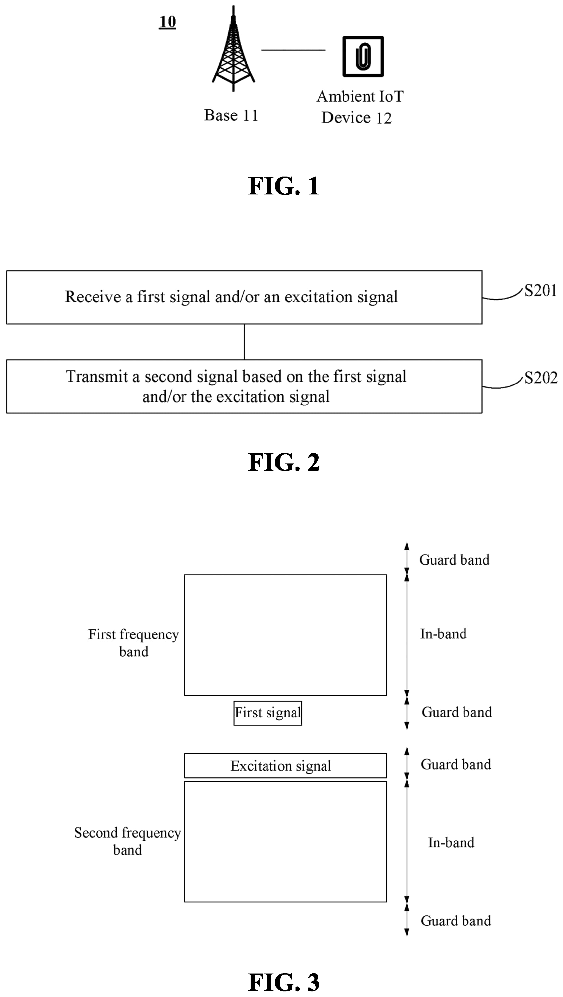

Taking the first node as an Ambient IoT device and the second node as a base station as an example, FIG. 1 illustrates a schematic diagram of an architecture of a communication system according to an embodiment of the present disclosure. As shown in FIG. 1, the communication system 10 comprises a base station 11 and an Ambient IoT device 12. The base station 11 and the Ambient IoT device 12 may be communicatively connected. The present disclosure does not limit the second node to be the base station, and the second node may also be a terminal, etc.

In some embodiments, the base station 11 is used to provide wireless access service to a plurality of Ambient IoT devices 12. Specifically, one base station 11 provides a service coverage area (also referred to as a cell). The Ambient IoT devices 12 entering this area may communicate with the base station 11 via a wireless signal, thereby receiving the wireless access service provided by the base station 11. There might be an overlapping area between the service coverage areas of base stations 11, and the Ambient IoT devices 12 located in the overlapping area may receive wireless signals from a plurality of base stations 11.

In some embodiments, the base station 11 may connect the plurality of Ambient IoT devices 12, e.g., the base station 11 connects Ambient IoT device 12 with Ambient IoT device 12. The Ambient IoT device 12 and the Ambient IoT device 12 may be located in the same cell, or may be located in different cells. That is, one base station 11 may provide network service to Ambient IoT devices 12 in one cell, or may simultaneously provide network service to Ambient IoT devices 12 in a plurality of cells.

In some embodiments, the base station 11 may be a base station or an evolutional node B (eNB or eNodeB) in long term evolution (LTE) or long term evolution advanced (LTE-A), a base station in a 5G network, or a base station in a future communication system, etc. The base station may comprise various network-side devices such as macro base stations, micro base stations, home base stations, remote radio heads, reconfigurable intelligent surfaces (RISs), routers, wireless fidelity (Wi-Fi) devices, or primary cells and secondary cells.

In some embodiments, the Ambient IoT device 12 may be a device with wireless transceiver functionality, and may be deployed on land, including indoors or outdoors, handheld, wearable, or vehicle-mounted; the Ambient IoT device 12 may also be deployed on water (e.g., ships, etc.); the Ambient IoT device 12 may also be deployed in the air (e.g., on airplanes, balloons, and satellites, etc.). The Ambient IoT device may be a terminal, a passive sensor, a passive radio frequency identification (RFID) tag, etc., which is not limited in the embodiments of the present disclosure.

It should be appreciated that FIG. 1 is an exemplary structural diagram, and the number of devices included in the communication system shown in FIG. 1 is not limited in the embodiment of the present disclosure. For example, the number of base stations is not limited, and the number of Ambient IoT devices is not limited. Moreover, in addition to the devices shown in FIG. 1, the communication system shown in FIG. 1 may also comprise other devices, which is not limited.

FIG. 2 illustrates a flowchart illustrating a signal transmission method according to an embodiment of the present disclosure. Exemplarily, the signal transmission method according to the present disclosure may be applied to the network architecture shown in FIG. 1, and may further be applied to the Ambient IoT device of FIG. 1.

As shown in FIG. 2, the signal transmission method according to the present disclosure may comprise the following S201-S202.

S201: receiving a first signal and/or an excitation signal.

S202: transmitting a second signal based on the first signal and/or the excitation signal.

It should be appreciated that in the embodiment of the present disclosure, taking the first node as the Ambient IoT device as an example, the first signal here may be a downlink signal transmitted by the base station to the Ambient IoT device, and the second signal is an uplink signal transmitted by the Ambient IoT device to the base station.

In some embodiments, the second signal may be a backscatter signal corresponding to the excitation signal.

In some embodiments, the second signal may also be a signal generated by the Ambient IoT device.

Illustration will be presented below herein by taking an example in which a first frequency band is a downlink frequency band of an FDD system, and a second frequency band is an uplink frequency band of the FDD system.

### Case 1

In some embodiments, the first signal is located in the first frequency band, and the second signal is located in the second frequency band.

In one implementation, a relationship between the first signal and the second signal satisfies at least one of the following:
the first signal is located in a first region or a second region of the first frequency band;
a frequency-domain interval between the first signal and a first reference point is less than a first interval;
the second signal is located in a first region or a second region of the second frequency band; or
a frequency-domain interval between the second signal and a second reference point is less than a second interval;
wherein the first interval and the second interval are respectively determined according to one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

### Case 1-1

In one implementation, the excitation signal is also located in the second frequency band, and a relationship between the excitation signal and the second signal satisfies at least one of the following:
the excitation signal is located in the first region or second region of the second frequency band; or
the second signal is located in the first region or second region of the second frequency band.

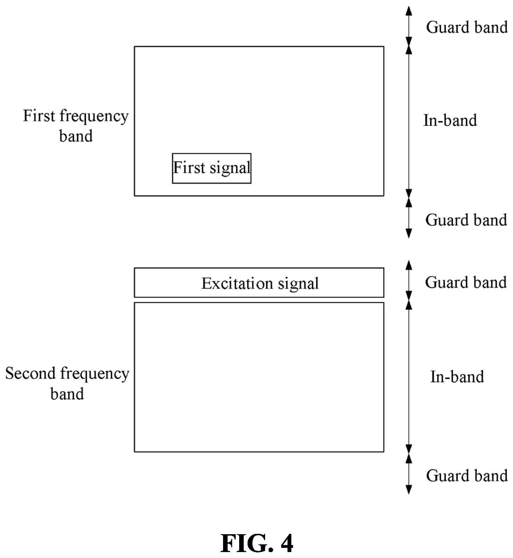

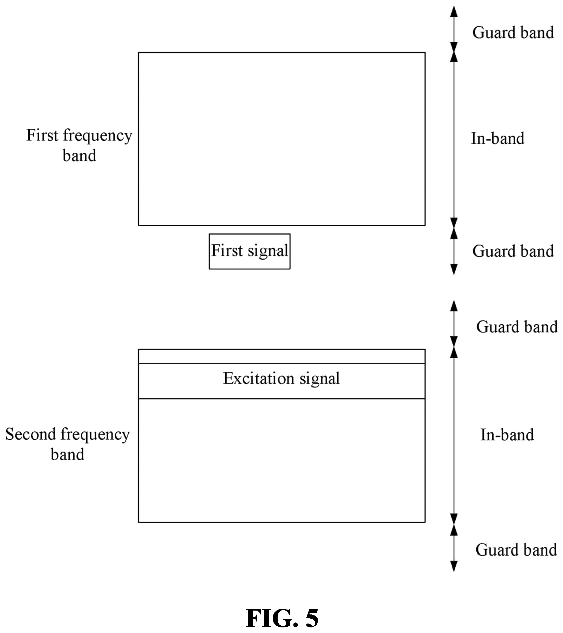

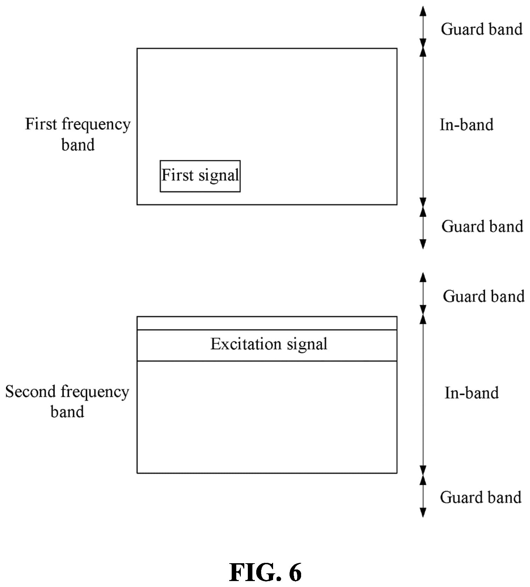

That is, regarding a relationship between the first signal and the excitation signal, in one example as shown in FIG. 3, the first signal is within a guard band of the first frequency band, and the excitation signal is within a guard band of the second frequency band. In another example as shown in FIG. 4, the first signal is within an in-band of the first frequency band, and the excitation signal is within the guard band of the second frequency band. In yet another example as shown in FIG. 5, the first signal is within the guard band of the first frequency band, and the excitation signal is within the in-band of the second frequency band. In yet another example as shown in FIG. 6, the first signal is within the in-band of the first frequency band, and the excitation signal is within the in-band of the second frequency band.

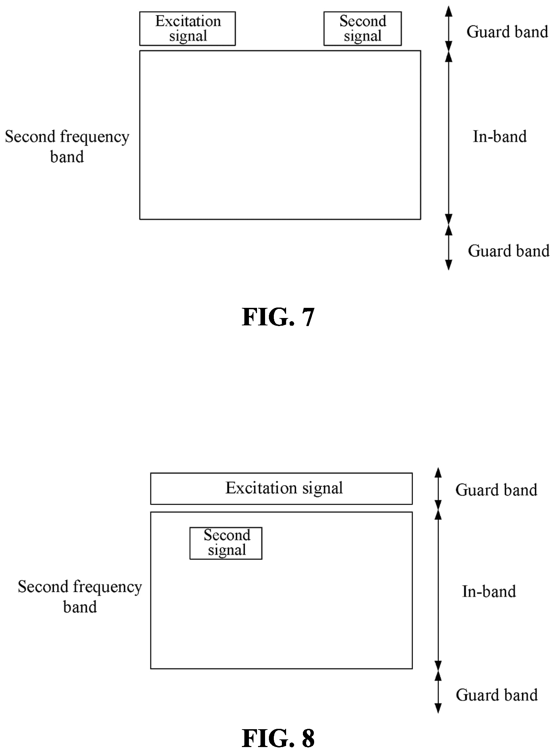

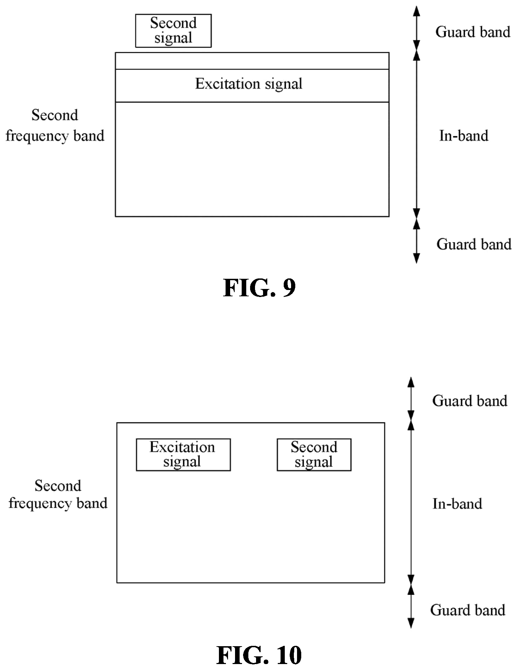

Regarding the relationship between the second signal and the excitation signal, as shown in FIG. 7, the second signal is within the guard band of the second frequency band, and the excitation signal is within the guard band of the second frequency band. In another example as shown in FIG. 8, the second signal is within the in-band of the second frequency band, and the excitation signal is within the guard band of the second frequency band. In yet another example as shown in FIG. 9, the second signal is within the guard band of the second frequency band, and the excitation signal is within the in-band of the second frequency band. In yet another example as shown in FIG. 10, the second signal is within the in-band of the second frequency band, and the excitation signal is within the in-band of the second frequency band.

### Case 1-2

In one implementation, the excitation signal is located in the first frequency band, and then the relationship between the excitation signal and the first signal satisfies at least one of the following:
the excitation signal is located in the first region or second region of the first frequency band;
the first signal is located in the first region or second region of the first frequency band; or
a bandwidth of the excitation signal is M times that of the first signal, where M is a positive number.

That is, in one example, the first signal is within the guard band of the first frequency band, and the excitation signal is within the guard band of the first frequency band. In another example, the first signal is within the in-band of the first frequency band, and the excitation signal is within the guard band of the first frequency band. In yet another example, the first signal is within the guard band of the first frequency band, and the excitation signal is within the in-band of the first frequency band. In yet another example, the first signal is within the in-band of the first frequency band, and the excitation signal is within the in-band of the first frequency band.

### Case 2

In some embodiments, the first signal and the second signal are located in the first frequency band.

In one implementation, the relationship between the first signal and the second signal satisfies at least one of the following:
the first signal is located in the first region or second region of the first frequency band;
the second signal is located in the first region or second region of the first frequency band;
a frequency-domain interval between the first signal and the second reference point is less than a third interval;
a frequency-domain interval between the second signal and the first reference point is less than a fourth interval; or
a frequency-domain interval between the first signal and the second signal is less than a fifth interval.

The third interval, the fourth interval, and the fifth interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

### Case 2-1

In one implementation, the excitation signal is also located in the first frequency band, and then the relationship between the excitation signal and the second signal satisfies at least one of the following:
the excitation signal is located in the first region or second region of the first frequency band;
the second signal is located in the first region or second region of the first frequency band; or
a frequency-domain interval between the excitation signal and the second signal is a sixth interval.

That is, in one example, the second signal is within the guard band of the first frequency band, and the excitation signal is within the guard band of the first frequency band. In another example, the second signal is within the in-band of the first frequency band, and the excitation signal is within the guard band of the first frequency band. In yet another example, the second signal is within the guard band of the first frequency band, and the excitation signal is within the in-band of the first frequency band. In yet another example, the second signal is within the in-band of the first frequency band, and the excitation signal is within the in-band of the first frequency band.

### Case 2-2

In one implementation, the excitation signal is also located in the first frequency band, and then the relationship between the excitation signal and the first signal satisfies at least one of the following:
the excitation signal is located in the first region or second region of the first frequency band;
the first signal is located in the first region or second region of the first frequency band; or
the bandwidth of the excitation signal is M times that of the first signal, where M is a positive number.

That is, in one example, the first signal is within the guard band of the first frequency band, and the excitation signal is within the guard band of the first frequency band. In another example, the first signal is within the in-band of the first frequency band, and the excitation signal is within the guard band of the first frequency band. In yet another example, the first signal is within the guard band of the first frequency band, and the excitation signal is within the in-band of the first frequency band. In yet another example, the first signal is within the in-band of the first frequency band, and the excitation signal is within the in-band of the first frequency band.

It needs to be appreciated that in the above Cases 1 to 2, the first region is the in-band of the frequency band, and the second region is the guard band of the frequency band.

In the above Cases 1 to 2, the first reference point is any one of: an in-band edge frequency point of the first frequency band, a fixed frequency point within the first frequency band, a middle frequency point of the guard band of the first frequency band, an edge frequency point of the guard band of the first frequency band, a frequency point determined based on signaling and located in the first frequency band, or the first signal/second signal/excitation signal located in the first frequency band.

In the above Cases 1 to 2, the second reference point is any one of: an in-band edge frequency point of the second frequency band, a fixed frequency point within the second frequency band, a middle frequency point of the guard band of the second frequency band, an edge frequency point of the guard band of the second frequency band, a frequency point determined based on signaling and located in the second frequency band, or the first signal/second signal/excitation signal located in the second frequency band.

In some embodiments, the edge frequency point may be determined according to at least one of: a physical resource block (PRB) with the largest PRB index, a PRB with the smallest PRB index, a subcarrier with the largest subcarrier index within a PRB, or a subcarrier with the smallest subcarrier index within a PRB. The same applies to the following embodiments.

In some embodiments, for the above Case 2, the first signal and the excitation signal overlap in a time domain and/or a frequency domain.

In some embodiments, the receiving an excitation signal in the above S201 may be implemented as: determining, according to first signaling, a frequency band in which the excitation signal is located from the first frequency band and the second frequency band and/or an in-band frequency domain position where the excitation signal is located, and receiving the excitation signal in the frequency band and/or the in-band frequency domain position.

In some embodiments, the first signaling comprises at least one of: higher layer signaling, or signaling carried in the first signal.

In some embodiments, the in-band frequency domain position may comprise a reference point and/or a frequency-domain interval from the reference point. The reference point may be an in-band edge frequency point of the first/second frequency band, a fixed frequency point within the first/second frequency band, a middle frequency point of the guard band of the first/second frequency band, an edge frequency point of the guard band of the first/second frequency band, etc.

That is, the first node may determine, according to the first signaling in higher layer signaling or the first signaling carried in the received first signal, whether the excitation signal is located in the first frequency band or the second frequency band, and determine a position of the excitation signal within the frequency band. The position here may be determined by the frequency-domain interval from the reference point.

For example, when the first signaling is 1, the frequency band where the excitation signal is located is the second frequency band; when the first signaling is 0, the frequency band where the excitation signal is located is the first frequency band.

As another example, when the first signaling is 00, the reference point is the in-band edge of the second frequency band (a frequency point corresponding to the subcarrier with the largest subcarrier index within the PRB having the largest PRB index). When the first signaling is 01, the reference point is the in-band edge of the second frequency band (a frequency point corresponding to the subcarrier with the largest subcarrier index within the PRB having the smallest PRB index). When the first signaling is 10, the reference point is the guard band edge of the second frequency band. When the first signaling is 11, the reference point is frequency point M whose value is predetermined.

As another example, the first signaling may indicate the frequency-domain interval between the excitation signal and the reference point, with 8-bit values predefined, and 3 bits of the first signal represent the frequency-domain interval between the excitation signal and the reference point.

As another example, the first signaling may also simultaneously indicate the reference point and the frequency-domain interval between the excitation signal and the reference point. For example, the second bit of the first signaling indicates the reference point, and the third bit indicates the frequency-domain interval between the excitation signal and the reference point.

In some embodiments, the receiving an excitation signal in the above S201 may be implemented as: determining the frequency band in which the excitation signal is located, at least according to the frequency band in which the second signal is located.

For example, if the second signal is in the uplink frequency band, then the excitation signal is also in the uplink frequency band.

In some embodiments, the receiving an excitation signal in the above S201 may be implemented as: determining that the frequency-domain interval between the excitation signal and the second signal is a sixth interval.

For example, if the frequency domain position corresponding to the second signal is PRB index 1, then the frequency domain position corresponding to the excitation signal is spaced apart from PRB index 1 by the sixth interval.

In some embodiments, the receiving an excitation signal in the above S201 may be implemented as: determining that the frequency-domain interval between the excitation signal and the first reference point/second reference point is less than a seventh interval.

The sixth interval and the seventh interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

In some embodiments, the receiving an excitation signal in the above S201 may be implemented as: determining that the excitation signal corresponds to one or more frequency domain positions.

That is, the excitation signal may be transmitted at a plurality of frequency domain positions.

For example, if there are 4 frequency domain positions, including: a first frequency domain position, a second frequency domain position, a third frequency domain position, and a fourth frequency domain position, then the excitation signal may be transmitted at the first frequency domain position within a first time unit; the excitation signal may be transmitted at the second frequency domain position within a second time unit; the excitation signal may be transmitted at the third frequency domain position within a third time unit; the excitation signal may be transmitted at the fourth frequency domain position within a fourth time unit, and so on.

In some embodiments, the first signal and the excitation signal may come from different devices. That is, the above S201 may be implemented as: receiving the first signal transmitted by the second node; and receiving the excitation signal transmitted by the second node or a third node.

For example, the first node may receive the first signal transmitted by the second node in the first frequency band, and receive the excitation signal transmitted by the third node in the second frequency band. Then, the first node transmits the second signal to the second node in the second frequency band.

As another example, the first node may receive the first signal transmitted by the second node in the first frequency band, and receive the excitation signal transmitted by the third node in the first frequency band. Then, the first node transmits the second signal to the second node in the second frequency band.

As another example, the first node may receive the first signal transmitted by the second node in the first frequency band, and receive the excitation signal transmitted by the third node in the first frequency band. Then, the first node transmits the second signal to the second node in the first frequency band.

In some embodiments, the first node also acquires second signaling. The second signaling is used to indicate at least one of: a device type, a device capability, a coverage capability, a frequency domain position corresponding to the second signal, a transmission mode of the second signal, whether to perform power amplifier amplification, whether to perform power amplification, a modulation mode, or a coding mode.

In some embodiments, the second signaling is carried in a frame header of the first signal, a control field of the first signal, a data field of the first signal, a medium access control (MAC) control element (CE), or radio resource control (RRC) signaling. The frame header is a starting part of a frame and used to identify the start of a frame or the start of a data field. It typically contains some specific identifiers or synchronization signals to help a receiver identify and lock onto the starting position of the frame. The control field is used to transmit control information, such as an address, a control command, etc. The content of the control field is usually specified by a communication protocol to implement functions such as connection establishment, data transmission control, flow control, etc. The data field is used to transmit actual data, i.e., the information the user needs to send.

An example is taken in which the second signaling indicates the device type and is carried in the frame header of the first signal. It is assumed that there are 3 types of devices: Device A, Device B, and Device C; when the second signaling is 00, the device type is Device A; when the second signaling is 01, the device type is Device B; when the second signaling is 10, the device type is Device C. The second node transmits the first signal, where the first signal is transmitted to a device of device type Device A, so the second signaling is 00 and is carried in the frame header of the first signal.

If a first node of device type Device A receives the first signal and parses the frame header of the first signal to obtain the second signaling as 00, then the first node determines that the first signal is transmitted for Device A, and continues to receive the first signal subsequently sent by the second node.

If a first node of device type Device B receives the first signal and parses the frame header of the first signal to obtain the second signaling as 00, then the first node determines that the first signal is transmitted for Device A, and the first node does not receive the first signal subsequently sent by the second node any longer.

An example is taken in which the second signaling indicates the device capability and is carried in the control field of the first signal. It is assumed that there are 2 types of device capabilities: Capability 1 represents passive, and Capability 2 represents a capability other than passive. It is assumed that the second signaling is 2 bits, wherein the first bit represents Capability 1 and the second bit represents Capability 2. The second node transmits the first signal, wherein the first signal is transmitted to a device with device capability Capability 1, so the second signaling is 10 and is sent carried in the control field of the first signal.

If the first node with device capability Capability 1 receives the first signal and parses the control field of the first signal to obtain the second signaling as 10, then the first node determines that the first signal is transmitted for a device with device capability Capability 1, and the first node continues to receive the first signal subsequently sent by the second node.

If the first node with device capability Capability 2 receives the first signal and parses the control field of the first signal to obtain the second signaling as 10, then the first node determines that the first signal is transmitted for a device with device capability Capability 1, and the first node does not receive the first signal subsequently sent by the second node any longer.

An example is taken in which the second signaling indicates the device coverage and is carried in the data field of the first signal. It is assumed that there are 2 types of device coverage: Coverage 1 represents normal coverage, Coverage 2 represents extended coverage. It is assumed that the second signaling is 2 bits, wherein the first bit represents Coverage 1 and the second bit represents Coverage 2. The second node transmits the first signal, wherein the first signal is transmitted to a device achieving the normal coverage, so the second signaling is 10 and is sent carried in the data field of the first signal.

If the first node with device coverage Coverage 1 receives the first signal and parses the data field of the first signal to obtain the second signaling as 10, then the first node determines that the first signal is transmitted for a device achieving the normal coverage, and first node continues to receive the first signal subsequently sent by the second node.

If the first node with device coverage Coverage 2 receives the first signal and parses the data field of the first signal to obtain the second signaling as 10, then the first node determines that the first signal is transmitted for a device achieving the normal coverage, and the first node does not receive the first signal subsequently sent by the second node any longer.

In some embodiments, the above first signaling and second signaling may be the same signaling. That is, the signaling may simultaneously indicate the device type/capability/coverage, as well as the frequency domain position.

Example 1: assume the frequency domain position includes the frequency band, indicated by 1 bit; when it is 1, the frequency band is the FDD uplink frequency band; when it is 0, it is the FDD downlink frequency band; the device type is indicated by 3 bits, each bit corresponding to one device type.

For example, the composition of the signaling is: the first 3 bits represent all device types, and the last 3 bits represent the frequency band, or the first 3 bits represent the frequency band, and the last 3 bits represent all device types. For example, if the signaling is 100100, the first bit of the first 3 bits is 1 and represents Device A, and the first bit of the last 3 bits is 1 and represents that the frequency band where Device A is located is the FDD uplink frequency band.

As another example, the composition of the signaling is: device type i and the frequency band where device type i is located. For example, if the signaling is 110000, then it indicates that the frequency band where Device A is located is the FDD uplink frequency band; i = all device types.

Example 2: assume the frequency domain position includes the frequency-domain interval from a reference point, indicated by 3 bits, where the bit values correspond to 8 predefined frequency-domain interval values; the device type is indicated by 2 bits, 10 indicates Device Type A, 01 indicates Device Type B, and 11 indicates Device Type C.

For example, the composition of the signaling is: the first 2 bits represent the device type, and the last 3 bits represent the frequency-domain interval from the reference point; or the first 3 bits represent the frequency-domain interval from the reference point, and the last 2 bits represent the device type. For example, if the signaling is 10111, then it indicates that the frequency-domain interval between the position of the excitation signal received by Device Type A and the reference point is 8.

In some embodiments, the transmission power of the excitation signal or the first signal is determined according to at least one of: a preset value, a configured value based on signaling, a device type of the first node, a coverage capability of the first node, a receiver type of the first node, or a received second signal strength. The node transmitting the excitation signal or the first signal may determine the transmission power in advance according to configuration of the base station or by obtaining relevant information of the first node, and transmit the excitation signal or the first signal to the first node with that power.

In some embodiments, the first node comprises a first sub-node and a second sub-node. The first node transmitting the second signal may involve the first sub-node and the second sub-node respectively transmitting the second signal.

The second signal transmitted by the first sub-node is a backscatter signal corresponding to the excitation signal, and the second signal transmitted by the second sub-node is one of: a backscatter signal corresponding to the excitation signal, or an autonomously generated signal.

For example, the second node receives the second signal transmitted by the first device in the second frequency band, wherein the frequency domain position of the second signal of the first sub-node is the same as that of the second signal of the second sub-node.

For example, the second node receives the second signal transmitted by the first device in the second frequency band, wherein the frequency domain position of the second signal of the first sub-node and the frequency domain position of the second signal of the second sub-node are both within the in-band of the second frequency band.

For example, the second node receives the second signal transmitted by the first device in the second frequency band, wherein the second signal of the first sub-node is located within the guard band of the second frequency band, and the second signal of the second sub-node is located at the in-band edge of the second frequency band.

For example, the second node receives the second signal transmitted by the first device in the second frequency band, wherein the second signal of the first sub-node is located at the in-band edge of the second frequency band, and the second signal of the second sub-node is located within the guard band of the second frequency band.

For example, the second node receives the second signal transmitted by the first device in the second frequency band. Assuming the second node transmits the excitation signal in the first frequency band, then the second signal of the first sub-node is located in the first frequency band, and the second signal of the second sub-node is located in the second frequency band.

In some embodiments, the transmitting a second signal in the above S202 may be configured according to at least one of the following:
when the second signal and the excitation signal are in the same frequency band, one or more frequency domain positions corresponding to the second signal are all lower than the frequency domain position corresponding to the excitation signal; for example, assume the second signal corresponds to two frequency domain positions, i.e., corresponds to a first frequency domain position in the first time unit and a second frequency domain position in the second time unit, then both the first frequency domain position and the second frequency domain position are lower than the frequency domain position where the excitation signal is located;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal; for example, if the second signal corresponds to two frequency domain positions, i.e., corresponds to a first frequency domain position in the first time unit and a second frequency domain position in the second time unit, then neither the first frequency domain position nor the second frequency domain position is the frequency domain position where the excitation signal is located;
the number of frequency domain positions corresponding to the second signal within the guard band of the frequency band is less than the number of frequency domain positions corresponding to the second signal within the in-band of the frequency band; for example, if the number of frequency domain positions corresponding to the second signal within the guard band is k1, and the number of frequency domain positions corresponding to the second signal within the in-band is k2, then k2 > k1;
when the second signal and the excitation signal are in the same frequency band, the one or more frequency domain positions corresponding to the second signal are determined at least according to the one or more frequency domain positions corresponding to the excitation signal; for example, if the excitation signal corresponds to a first frequency domain position in the first time unit and a second frequency domain position in the second time unit, then the frequency domain position corresponding to the second signal in the first time unit is determined at least according to the first frequency domain position, and the frequency domain position corresponding to the second signal in the second time unit is determined at least according to the second frequency domain position;
determining the frequency domain position where the second signal is located, at least according to a cell index;
determining the frequency domain position where the second signal is located, at least according to signaling.

In some embodiments, the transmitting a second signal in the above S202 may have at least one of the following features:
the frequency band where the second signal is located is the same as the frequency band where the excitation signal is located;
the frequency domain position corresponding to the second signal is the same as that corresponding to the excitation signal;
the frequency band where the second signal is located is the second frequency band;
the frequency domain position corresponding to the second signal is the same as that corresponding to the backscatter signal corresponding to the excitation signal;
a time domain position corresponding to the second signal is determined at least according to the time domain position of the first signal;
when the first signal and the second signal are in a TDD frequency band, an uplink/downlink configuration corresponding to the TDD is determined at least according to the transmission of the first signal and the second signal; for example, if the first signal needs to be transmitted in a first time domain position and the second signal needs to be transmitted in a second time domain position, then the uplink/downlink configuration corresponding to the TDD is configured such that the downlink is definitely in the first time domain position, and an uplink/flexible subframe is definitely in the second time domain position;
the frequency band where the second signal is located is the same as the frequency band where the first signal is located.

In some embodiments, the second signal is a signal actively generated by the first node (or a signal generated internally by the first node).

In some embodiments, the first node determines a first parameter corresponding to the second signal at least according to a first parameter corresponding to the first signal.

The first parameter comprises at least one of: a symbol length, a subcarrier spacing, a cyclic prefix, a time domain length, or a number of subcarriers.

For example, assuming the symbol length of the first signal is L1, the symbol length of the second signal is L1/N, or L1*N.

For example, assuming the subcarrier spacing of the first signal is 15 kHz, the symbol length of the second signal is 15*N kHz.

For example, assuming the time domain length of the first signal transmission is h milliseconds, the time domain length upon transmission of the second signal is h+N.

In some embodiments, the frequency domain position of the first signal, the second signal, or the excitation signal is located at any one of:
the first n PRBs of the frequency band;
the last n PRBs of the frequency band;
n PRBs within the guard band immediately adjacent to the first PRB in the frequency band;
n PRBs within the guard band immediately adjacent to the last PRB in the frequency band;
n PRBs including n1 PRBs within the guard band of the frequency band and n2 PRBs within the in-band of an adjacent frequency band, where n, n1, n2 are positive integers.

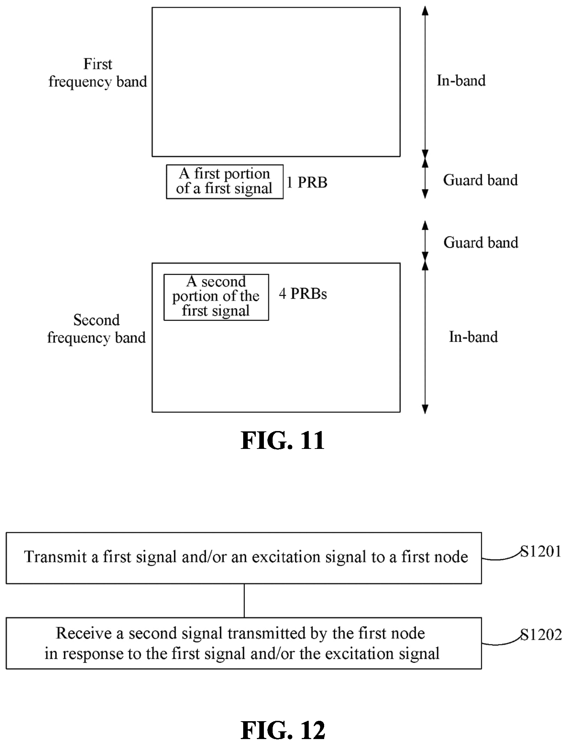

For example, as shown in FIG. 4, the first signal is located in the first n PRBs of the first frequency band (at a position near a lower edge of the first frequency band in the figure). As another example, as shown in FIG. 5, the excitation signal is located in the last n PRBs of the second frequency band (at a position near an upper edge of the second frequency band in the figure). As another example, as shown in FIG. 4, the excitation signal is located within the guard band immediately adjacent to the last PRB in the frequency band. As another example, as shown in FIG. 5, the first signal is located within the guard band immediately adjacent to the first PRB in the frequency band. As another example, as shown in FIG. 11, the first signal corresponds to 5 PRBs; a first portion (corresponding to 1 PRB) of the first signal is located within the guard band of the first frequency band, and a second portion (corresponding to 4 PRBs) of the first signal is located within the in-band of the second frequency band.

FIG. 12 illustrates a flowchart illustrating another signal transmission method according to an embodiment of the present disclosure. Exemplarily, the signal transmission method according to the present disclosure may be applied to the network architecture shown in FIG. 1, and further, to the base station of FIG. 1.

As shown in FIG. 12, the signal transmission method according to the present disclosure may include the following S1201-S1202.

S1201: transmitting a first signal and/or an excitation signal to a first node.

S1202: receiving a second signal transmitted by the first node in response to the first signal and/or the excitation signal.

The second node may be a base station, a terminal, or a relay device.

In some embodiments, the first node may receive the first signal and the excitation signal transmitted by the second node. The first node may also receive the first signal transmitted by the second node and the excitation signal transmitted by the third node, where the second node and the third node are different devices.

Case 3 (corresponding to Case 1 on the first node side)

In some embodiments, the first signal is located in a first frequency band, and the second signal is located in a second frequency band.

In one implementation, a relationship between the first signal and the second signal satisfies at least one of the following:
the first signal is located in a first region or a second region of the first frequency band;
a frequency-domain interval between the first signal and a first reference point is less than a first interval;
the second signal is located in a first region or a second region of the second frequency band;
a frequency-domain interval between the second signal and a second reference point is less than a second interval;
the first interval and the second interval are respectively determined according to one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

### Case 3-1

In one implementation, the excitation signal is also located in the second frequency band, and the relationship between the excitation signal and the second signal satisfies at least one of the following:
the excitation signal is located in the first region or the second region of the second frequency band;
the second signal is located in the first region or the second region of the second frequency band.

That is, in one example, as shown in FIG. 7, the second signal is within the guard band of the second frequency band, and the excitation signal is within the guard band of the second frequency band. In another example, as shown in FIG. 8, the second signal is within the in-band of the second frequency band, and the excitation signal is within the guard band of the second frequency band. In yet another example, as shown in FIG. 9, the second signal is within the guard band of the second frequency band, and the excitation signal is within the in-band of the second frequency band. In yet another example, as shown in FIG. 10, the second signal is within the in-band of the second frequency band, and the excitation signal is within the in-band of the second frequency band.

### Case 3-2

In one implementation, the excitation signal is located in the first frequency band, and then the relationship between the excitation signal and the first signal satisfies at least one of the following:
the excitation signal is located in the first region or second region of the first frequency band;
the first signal is located in the first region or second region of the first frequency band;
the bandwidth of the excitation signal is M times that of the first signal, where M is a positive number.

That is, in one example, the first signal is within the guard band of the first frequency band, and the excitation signal is within the guard band of the first frequency band. In another example, the first signal is within the in-band of the first frequency band, and the excitation signal is within the guard band of the first frequency band. In yet another example, the first signal is within the guard band of the first frequency band, and the excitation signal is within the in-band of the first frequency band. In yet another example, the first signal is within the in-band of the first frequency band, and the excitation signal is within the in-band of the first frequency band.

### Case 4 (corresponding to Case 2 on the first node side)

In some embodiments, the first signal and the second signal are located in the first frequency band.

In one implementation, the relationship between the first signal and the second signal satisfies at least one of the following:
the first signal is located in the first region or second region of the first frequency band;
the second signal is located in the first region or second region of the first frequency band;
a frequency-domain interval between the first signal and a second reference point is less than a third interval;
a frequency-domain interval between the second signal and a first reference point is less than a fourth interval;
a frequency-domain interval between the first signal and the second signal is less than a fifth interval.

The third interval, the fourth interval, and the fifth interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

### Case 4-1

In one implementation, the excitation signal is also located in the first frequency band, and then the relationship between the excitation signal and the second signal satisfies at least one of the following:
the excitation signal is located in the first region or second region of the first frequency band;
the second signal is located in the first region or second region of the first frequency band;
a frequency-domain interval between the excitation signal and the second signal is a sixth interval.

That is, in one example, the second signal is within the guard band of the first frequency band, and the excitation signal is within the guard band of the first frequency band. In another example, the second signal is within the in-band of the first frequency band, and the excitation signal is within the guard band of the first frequency band. In yet another example, the second signal is within the guard band of the first frequency band, and the excitation signal is within the in-band of the first frequency band. In yet another example, the second signal is within the in-band of the first frequency band, and the excitation signal is within the in-band of the first frequency band.

### Case 4-2

In one implementation, the excitation signal is also located in the first frequency band, and then the relationship between the excitation signal and the first signal satisfies at least one of the following:
the excitation signal is located in the first region or second region of the first frequency band;
the first signal is located in the first region or second region of the first frequency band;
the bandwidth of the excitation signal is M times that of the first signal, where M is a positive number.

That is, in one example, the first signal is within the guard band of the first frequency band, and the excitation signal is within the guard band of the first frequency band. In another example, the first signal is within the in-band of the first frequency band, and the excitation signal is within the guard band of the first frequency band. In yet another example, the first signal is within the guard band of the first frequency band, and the excitation signal is within the in-band of the first frequency band. In yet another example, the first signal is within the in-band of the first frequency band, and the excitation signal is within the in-band of the first frequency band.

It needs to be appreciated that in the above Cases 3 to 4, the first region is the in-band of the frequency band, and the second region is the guard band of the frequency band.

In the above Cases 3 to 4, the first reference point is any one of: an in-band edge frequency point of the first frequency band, a fixed frequency point within the first frequency band, a middle frequency point of the guard band of the first frequency band, an edge frequency point of the guard band of the first frequency band, a frequency point determined based on signaling and located in the first frequency band, or the first signal/second signal/excitation signal located in the first frequency band.

In the above Cases 3 to 4, the second reference point is any one of: an in-band edge frequency point of the second frequency band, a fixed frequency point within the second frequency band, a middle frequency point of the guard band of the second frequency band, an edge frequency point of the guard band of the second frequency band, a frequency point determined based on signaling and located in the second frequency band, or the first signal/second signal/excitation signal located in the second frequency band.

In some embodiments, the edge frequency point may be determined according to at least one of: a physical resource block (PRB) with the largest PRB index, a PRB with the smallest PRB index, a subcarrier with the largest subcarrier index within a PRB, or a subcarrier with the smallest subcarrier index within a PRB.

In some embodiments, for the above Case 2, the first signal and the excitation signal overlap in a time domain and/or a frequency domain.

In some embodiments, the transmitting an excitation signal by the second node may be implemented as: determining, according to first signaling, a frequency band where the excitation signal is located from the first frequency band and the second frequency band and/or an in-band frequency domain position where the excitation signal is located, and transmitting the excitation signal in the frequency band and/or the frequency domain position.

In some embodiments, the first signaling comprises at least one of: higher layer signaling, or signaling carried in the first signal.

In some embodiments, the transmitting an excitation signal by second node may be implemented as: determining the frequency band where the excitation signal is located, at least according to the frequency band where the second signal is located.

In some embodiments, the transmitting an excitation signal by second node may be implemented in a way that the frequency-domain interval between the excitation signal and the second signal is a sixth interval.

In some embodiments, the transmitting an excitation signal by second node may be implemented in a way that the frequency-domain interval between the excitation signal and the first reference point/second reference point is less than a seventh interval.

The sixth interval and the seventh interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode of the second signal.

In some embodiments, the transmitting an excitation signal by the second node may be implemented in a way that the excitation signal corresponds to one or more frequency domain positions.

That is, the second node may transmit the excitation signal at a plurality of frequency domain positions.

In some embodiments, the second signaling obtained by the first node is used to indicate at least one of: a device type, a device capability, a coverage capability, a frequency domain position corresponding to the second signal, a transmission mode of the second signal, whether to perform power amplifier amplification, whether to perform power amplification, a modulation mode, or a coding mode.

In some embodiments, the second signaling is carried in a frame header of the first signal, a control field of the first signal, a data field of the first signal, a MAC control element, or RRC signaling.

In some embodiments, the transmission power of the excitation signal or the first signal is determined according to at least one of: a preset value, a configured value based on signaling, a device type of the first node, a coverage capability of the first node, a receiver type of the first node, or a received second signal strength.

In some embodiments, the first node comprises a first sub-node and a second sub-node. The receiving the second signal in the above S1202 may be receiving the second signals sent by the first sub-node and the second sub-node respectively.

The second signal transmitted by the first sub-node is a backscatter signal corresponding to the excitation signal, and the second signal transmitted by the second sub-node is one of: a backscatter signal corresponding to the excitation signal, or an autonomously generated signal.

In some embodiments, the receiving a second signal in the above S1202 may be configured according to at least one of the following:
when the second signal and the excitation signal are in the same frequency band, one or more frequency domain positions corresponding to the second signal are all lower than the frequency domain position corresponding to the excitation signal;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal;
the number of frequency domain positions corresponding to the second signal within the guard band of the frequency band is less than the number of frequency domain positions corresponding to the second signal within the in-band of the frequency band;
when the second signal and the excitation signal are in the same frequency band, one or more frequency domain positions corresponding to the second signal are determined at least according to the one or more frequency domain positions corresponding to the excitation signal;
determining the frequency domain position where the second signal is located, at least according to a cell index;
determining the frequency domain position where the second signal is located, at least according to signaling;
the second signal is a backscatter signal corresponding to the excitation signal.

In some embodiments, the receiving a second signal in the above S1202 may have at least one of the following features:
the frequency band where the second signal is located is the same as that where the excitation signal is located;
the frequency domain position corresponding to the second signal is the same as that corresponding to the excitation signal;
the frequency band where the second signal is located is the second frequency band;
the frequency domain position corresponding to the second signal is the same as that corresponding to the backscatter signal corresponding to the excitation signal;
the time domain position corresponding to the second signal is determined at least according to the time domain position of the first signal;
when the first signal and the second signal are in a TDD frequency band, an uplink/downlink configuration corresponding to the TDD is determined at least according to the transmission of the first signal and the second signal;
the frequency band where the second signal is located is the same as that where the first signal is located;
the second signal is a signal actively generated by the first node.

In some embodiments, the first node determines a first parameter corresponding to the second signal at least according to a first parameter corresponding to the first signal.

The first parameter comprises at least one of: a symbol length, a subcarrier spacing, a cyclic prefix, a time domain length, or a number of subcarriers.

In some embodiments, the frequency domain position of the first signal, the second signal, or the excitation signal is located at any one of:
the first n PRBs of the frequency band;
the last n PRBs of the frequency band;
n PRBs within the guard band immediately adjacent to the first PRB in the frequency band;
n PRBs within the guard band immediately adjacent to the last PRB in the frequency band;
n PRBs including n1 PRBs within the guard band of the frequency band and n2 PRBs within the in-band of an adjacent frequency band, where n, n1, n2 are positive integers.

In the signal transmission method according to the embodiment of the present disclosure, communication between two nodes is achieved by receiving the first signal and/or the excitation signal, and transmitting the second signal based on the first signal and/or the excitation signal. The present disclosure integrates the Ambient IoT with an FDD/TDD system by configuring the distribution of the first signal, second signal, and excitation signal in the frequency bands of the FDD system, or by configuring the uplink/downlink configuration when the signals are located in the TDD frequency bands, thereby enabling the transmission of the Ambient IoT on the FDD/TDD system.

It will be appreciated that, in order to realize the above functions, the communication device (which may be the above first node or second node) comprises corresponding hardware structures and/or software modules for performing respective functions. Those skilled in the art should readily appreciate that, in combination with the algorithm steps of the examples described in the embodiments of the present disclosure, the present disclosure can be implemented in hardware or a combination of hardware and computer software. Whether a function is performed by hardware or computer software driving hardware depends on the specific application and design constraints of the technical solution. Those skilled in the art may use different methods for each specific application to implement the described functions, but such implementation should not be considered as going beyond the scope of the present disclosure.

In embodiments of the present disclosure, the communication device may be divided into functional modules according to the above method embodiments. For example, each functional module may be divided corresponding to each function, or two or more functions may be integrated into one functional module. The above integrated module may be implemented in the form of hardware or software. It should be noted that the division of modules in the embodiments of the present disclosure is illustrative and is only a logical function division; there may be other division manners in actual implementation. The following illustration is presented by taking an example in which each functional module is divided for each function.

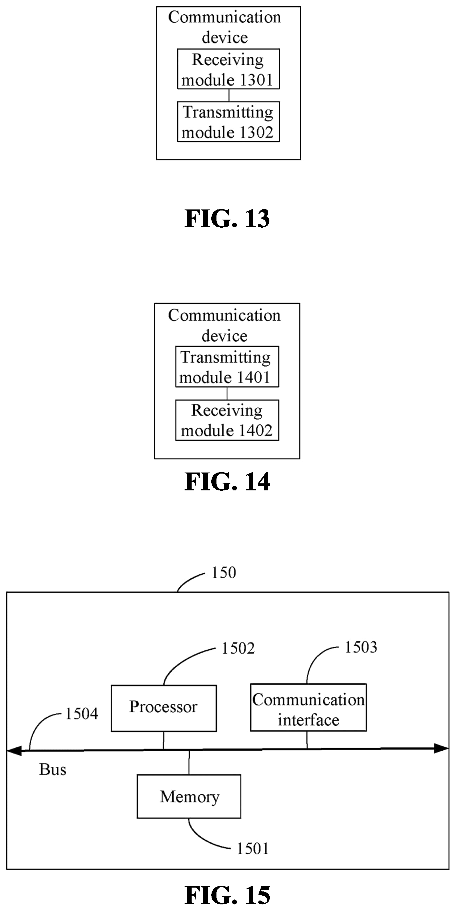

FIG. 13 illustrates a schematic structural diagram of a communication device according to an embodiment of the present disclosure. The communication device may execute the signal transmission methods according to the above method embodiments. As shown in FIG. 13, the communication device comprises a receiving module 1301 and a transmitting module 1302.

The receiving module 1301 is configured to receive a first signal and/or an excitation signal;
The transmitting module 1302 is configured to transmit a second signal based on the first signal and/or the excitation signal.

In some embodiments, the first signal is located in a first frequency band, and the second signal is located in a second frequency band.

In some embodiments, a relationship between the first signal and the second signal satisfies at least one of the following:
the first signal is located in a first region or a second region of the first frequency band;
a frequency-domain interval between the first signal and a first reference point is less than a first interval;
the second signal is located in a first region or a second region of the second frequency band;
a frequency-domain interval between the second signal and a second reference point is less than a second interval;
the first interval and the second interval are respectively determined according to one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

In some embodiments, the first signal and the second signal are located in the first frequency band.

In some embodiments, a relationship between the first signal and the second signal satisfies at least one of the following:
the first signal is located in the first region or second region of the first frequency band;
the second signal is located in the first region or second region of the first frequency band;
a frequency-domain interval between the first signal and the second reference point is less than a third interval;
a frequency-domain interval between the second signal and the first reference point is less than a fourth interval;
a frequency-domain interval between the first signal and the second signal is less than a fifth interval.

The third interval, the fourth interval, and the fifth interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

In some embodiments, the first region is an in-band of the frequency band, and the second region is a guard band of the frequency band.

In some embodiments, the receiving an excitation signal further comprises at least one of:
determining, according to first signaling, a frequency band where the excitation signal is located from the first frequency band and the second frequency band and/or a frequency domain position where the excitation signal is located, and receiving the excitation signal in the frequency band and/or the frequency domain position;
determining the frequency band where the excitation signal is located, at least according to the frequency band where the second signal is located;
determining that the frequency-domain interval between the excitation signal and the second signal is a sixth interval;
determining that the frequency-domain interval between the excitation signal and the first reference point/second reference point is less than a seventh interval;
determining that the excitation signal corresponds to one or more frequency domain positions.

The sixth interval and the seventh interval are respectively determined according to at least one of: a fixed value, a preset value, a type of the first node, an energy acquisition manner of the first node, a coverage capability of the first node, a type of region where the excitation signal is located, a type of region where the second signal is located, a position of the first frequency band, a position of the second frequency band, or a transmission mode based on the second signal.

In some embodiments, the first signaling comprises at least one of: higher layer signaling, or signaling carried in the first signal.

In some embodiments, the first reference point is any one of: an in-band edge frequency point of the first frequency band, a fixed frequency point within the first frequency band, a middle frequency point of the guard band of the first frequency band, an edge frequency point of the guard band of the first frequency band, a frequency point determined based on signaling and located in the first frequency band, or the first signal/second signal/excitation signal located in the first frequency band.

In some embodiments, the second reference point is any one of: an in-band edge frequency point of the second frequency band, a fixed frequency point within the second frequency band, a middle frequency point of the guard band of the second frequency band, an edge frequency point of the guard band of the second frequency band, a frequency point determined based on signaling and located in the second frequency band, or the first signal/second signal/excitation signal located in the second frequency band.

In some embodiments, a bandwidth of the first signal is M times that of the excitation signal, M being an integer greater than zero.

In some embodiments, the first signal and the excitation signal overlap in a time domain and/or a frequency domain.

In some embodiments, the receiving module 1301 is further configured to receive the first signal transmitted by a second node; the receiving module 1301 is further configured to receive the excitation signal transmitted by the second node or a third node.

In some embodiments, the receiving module 1301 is further configured to acquire second signaling, where the second signaling is used to indicate at least one of: a device type, a device capability, a coverage capability, a frequency domain position corresponding to the second signal, a transmission mode of the second signal, whether to perform power amplifier amplification, whether to perform power amplification, a modulation mode, or a coding mode.

In some embodiments, the second signaling is carried in a frame header of the first signal, a control field of the first signal, a data field of the first signal, a MAC control element, or RRC signaling.

In some embodiments, a transmission power of the excitation signal or the first signal is determined according to at least one of: a preset value, a configured value based on signaling, a device type of the first node, a coverage capability of the first node, a receiver type of the first node, or a received second signal strength.

In some embodiments, the transmitting a second signal based on the first signal and/or the excitation signal further comprises at least one of:
when the second signal and the excitation signal are in the same frequency band, one or more frequency domain positions corresponding to the second signal are all lower than the frequency domain position corresponding to the excitation signal;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal;
the number of frequency domain positions corresponding to the second signal within the guard band of the frequency band is less than the number of frequency domain positions corresponding to the second signal within the in-band of the frequency band;
when the second signal and the excitation signal are in the same frequency band, the one or more frequency domain positions corresponding to the second signal are determined at least according to the one or more frequency domain positions corresponding to the excitation signal;
determining the frequency domain position where the second signal is located, at least according to a cell index;
determining the frequency domain position where the second signal is located, at least according to signaling;
the second signal is a backscatter signal corresponding to the excitation signal.

In some embodiments, the transmitting a second signal based on the first signal and/or excitation signal further comprises at least one of the following:
the frequency band where the second signal is located is the same as that where the excitation signal is located;
the frequency domain position corresponding to the second signal is the same as that corresponding to the excitation signal;
the frequency band where the second signal is located is the second frequency band;
the frequency domain position corresponding to the second signal is the same as that corresponding to the backscatter signal corresponding to the excitation signal;
the time domain position corresponding to the second signal is determined at least according to the time domain position of the first signal;
when the first signal and the second signal are in a TDD frequency band, an uplink/downlink configuration corresponding to the TDD is determined at least according to the transmission of the first signal and the second signal;
the frequency band where the second signal is located is the same as that where the first signal is located;
the second signal is a signal actively generated by the first node.

In some embodiments, the relationship between the first signal and the second signal satisfies the following: determining a first parameter corresponding to the second signal at least according to a first parameter corresponding to the first signal, wherein the first parameter comprises at least one of: a symbol length, a subcarrier spacing, a cyclic prefix, a time domain length, or a number of subcarriers.

In some embodiments, the frequency domain position of the first signal, the second signal, or the excitation signal is located at any one of:
the first n PRBs of the frequency band;
the last n PRBs of the frequency band;
n PRBs within the guard band immediately adjacent to the first PRB in the frequency band;
n PRBs within the guard band immediately adjacent to the last PRB in the frequency band;
n PRBs including n1 PRBs within the guard band of the frequency band and n2 PRBs within the in-band of an adjacent frequency band, where n, n1, n2 are positive integers.

FIG. 14 illustrates a schematic structural diagram of another communication device according to an embodiment of the present disclosure. The communication device may execute the signal transmission methods according to the above method embodiments. As shown in FIG. 14, the communication device comprises a transmitting module 1401 and a receiving module 1402.

The transmitting module 1401 is configured to transmit a first signal and/or an excitation signal to a first node.

The receiving module 1402 is configured to receive a second signal transmitted by the first node in response to the first signal and/or the excitation signal.

In some embodiments, the first signal is located in a first frequency band, and the second signal is located in a second frequency band.

In some embodiments, the first signal and the second signal are located in the first frequency band.

In some embodiments, the transmitting an excitation signal further comprises at least one of:
determining, according to first signaling, a frequency band where the excitation signal is located from the first frequency band and the second frequency band and/or a frequency domain position where the excitation signal is located, and transmitting the excitation signal in the frequency band and/or the frequency domain position;
determining the frequency band where the excitation signal is located, at least according to the frequency band where the second signal is located;
determining that a frequency-domain interval between the excitation signal and the second signal is a sixth interval;
determining that the frequency-domain interval between the excitation signal and a first reference point/a second reference point is less than a seventh interval;
determining that the excitation signal corresponds to one or more frequency domain positions.

The sixth interval and the seventh interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

In some embodiments, a bandwidth of the first signal is M times that of the excitation signal, M being an integer greater than zero.

In some embodiments, the first signal and the excitation signal overlap in a time domain and/or a frequency domain.

In some embodiments, second signaling obtained by the first node is used to indicate at least one of: a device type, a device capability, a coverage capability, a frequency domain position corresponding to the second signal, a transmission mode of the second signal, whether to perform power amplifier amplification, whether to perform power amplification, a modulation mode, or a coding mode.

In some embodiments, the second signaling is carried in a frame header of the first signal, a control field of the first signal, a data field of the first signal, a MAC control element, or RRC signaling.

In some embodiments, a transmission power of the excitation signal or the first signal is determined according to at least one of: a preset value, a configured value based on signaling, a device type of the first node, a coverage capability of the first node, a receiver type of the first node, or a received second signal strength.

In some embodiments, the second signal transmitted by the second node in response to the first signal and/or the excitation signal further comprises at least one of:
when the second signal and the excitation signal are in the same frequency band, one or more frequency domain positions corresponding to the second signal are all lower than the frequency domain position corresponding to the excitation signal;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal;
the number of frequency domain positions corresponding to the second signal within the guard band of the frequency band is less than the number of frequency domain positions corresponding to the second signal within the in-band of the frequency band;
when the second signal and the excitation signal are in the same frequency band, one or more frequency domain positions corresponding to the second signal are determined at least according to one or more frequency domain positions corresponding to the excitation signal;
determining the frequency domain position where the second signal is located, at least according to a cell index;
determining the frequency domain position where the second signal is located, at least according to signaling;
the second signal is a backscatter signal corresponding to the excitation signal.

In some embodiments, the second signal transmitted by the second node in response to the first signal and/or excitation signal further comprises at least one of the following:
the frequency band where the second signal is located is the same as that where the excitation signal is located;
the frequency domain position corresponding to the second signal is the same as that corresponding to the excitation signal;
the frequency band where the second signal is located is the second frequency band;
the frequency domain position corresponding to the second signal is the same as that corresponding to the backscatter signal corresponding to the excitation signal;
the time domain position corresponding to the second signal is determined at least according to the time domain position of the first signal;
when the first signal and the second signal are in a TDD frequency band, an uplink/downlink configuration corresponding to the TDD is determined at least according to the transmission of the first signal and the second signal;
the second signal is a signal actively generated by the first node.

In some embodiments, the frequency domain position of the first signal, the second signal, or the excitation signal is located at any one of:
the first n PRBs of the frequency band;
the last n PRBs of the frequency band;
n PRBs within the guard band immediately adjacent to the first PRB in the frequency band;
n PRBs within the guard band immediately adjacent to the last PRB in the frequency band;
n PRBs including n1 PRBs within the guard band of the frequency band and n2 PRBs within the in-band of an adjacent frequency band, where n, n1, n2 are positive integers.

In a case where the functions of the above integrated modules are implemented in the form of hardware, an embodiment of the present disclosure provides another structure of the communication device involved in the above embodiment. As shown in FIG. 15, the communication device 150 comprises: a memory 1501, a processor 1502, a communication interface 1503, and a bus 1504.

The memory 1501 may be a read-only memory (ROM) or other type of static storage device that may store static information and instructions, a random access memory (RAM) or other type of dynamic storage device that may store dynamic information and instructions, or an electrically erasable programmable read-only memory (EEPROM), a magnetic disk storage medium or other magnetic storage device, or any other medium that can be used to carry or store desired program code in the form of instructions or data structures and that can be accessed by a computer, but is not limited thereto.

The processor 1502 may be a device that implements or executes various exemplary logic blocks, modules, and circuits described in connection with the embodiments of the present disclosure. The processor 1502 may be a central processing unit, a general-purpose processor, a digital signal processor, an application-specific integrated circuit, a field-programmable gate array, or other programmable logic device, a transistor logic device, a hardware component, or any combination thereof. The processor 1502 may implement or execute various exemplary logic blocks, modules, and circuits described in connection with the embodiments of the present disclosure. The processor 1502 may also be a combination that implements computing functions, e.g., a combination of one or more microprocessors, a combination of a DSP and a microprocessor, etc.

The communication interface 1503 is used to connect to other devices via a communication network. The communication network may be Ethernet, a wireless access network, a wireless local area network (WLAN), etc.

In some embodiments, the memory 1501 may exist independently of the processor 1502, and the memory 1501 may be connected to the processor 1502 via the bus 1504 for storing instructions or program codes. When the processor 1502 calls and executes the instructions or program codes stored in the memory 1501, it can implement the signal transmission method according to the embodiments of the present disclosure.

In some embodiments, the memory 1501 may also be integrated with the processor 1502.

The bus 1504 may be an extended industry standard architecture (EISA) bus, etc. The bus 1504 may be divided into an address bus, a data bus, a control bus, etc. For ease of representation, only one thick line is used in FIG. 15 to represent the bus 1504, but this does not mean that there is only one bus or one type of bus.

In some embodiments, the memory 1501 stores executable instructions, and when the processor 1502 executes the executable instructions, the communication device performs the signal transmission method according to any of the above embodiments.

Some embodiments of the present disclosure provide a computer-readable storage medium (e.g., a non-transitory computer-readable storage medium) having computer program instructions stored thereon, which, when executed on a computer, cause the computer to perform the signal transmission method according to any of the above embodiments.

Exemplarily, the above computer-readable storage medium may include, but is not limited to: magnetic storage devices (e.g., a hard disk, a floppy disk, or a magnetic tape, etc.), optical disks (e.g., a compact disk (CD), a digital versatile disk (DVD), etc.), smart cards, and flash memory devices (e.g., an erasable programmable read-only memory (EPROM), a card, a stick, or a key drive, etc.). The various computer-readable storage media described herein may represent one or more devices and/or other machine-readable storage media for storing information. The term "machine-readable storage medium" may include, but is not limited to, wireless channels and various other media capable of storing, containing, and/or carrying instructions and/or data.

An embodiment of the present disclosure provides a computer program product containing instructions, which, when executed on a computer, causes the computer to perform the signal transmission method according to any of the above embodiments.

What are described above are merely specific embodiments of the present disclosure, but the protection scope of the present disclosure is not limited thereto. Any changes or substitutions within the technical scope disclosed in the present disclosure shall be covered by the protection scope of the present disclosure. Therefore, the protection scope of the present disclosure shall be subject to the protection scope of the claims.

## Claims

1. A signal transmission method, applied to a first node, comprising:
receiving a first signal and/or an excitation signal; and
transmitting a second signal based on the first signal and/or the excitation signal.

2. The method according to claim 1, wherein the first signal is located in a first frequency band, and the second signal is located in a second frequency band.

3. The method according to claim 2, wherein a relationship between the first signal and the second signal satisfies at least one of:
the first signal is located in a first region or a second region of the first frequency band;
a frequency-domain interval between the first signal and a first reference point is less than a first interval;
the second signal is located in a first region or a second region of the second frequency band; or
a frequency-domain interval between the second signal and a second reference point is less than a second interval;
wherein the first interval and the second interval are respectively determined according to one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

4. The method according to claim 1, wherein the first signal and the second signal are located in a first frequency band.

5. The method according to claim 4, wherein a relationship between the first signal and the second signal satisfies at least one of:
the first signal is located in a first region or a second region of the first frequency band;
the second signal is located in a first region or a second region of the first frequency band;
a frequency-domain interval between the first signal and a second reference point is less than a third interval;
a frequency-domain interval between the second signal and a first reference point is less than a fourth interval; or
a frequency-domain interval between the first signal and the second signal is less than a fifth interval;
wherein the third interval, the fourth interval and the fifth interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

6. The method according to claim 3 or 5, wherein the first region is an in-band of the frequency band, and the second region is a guard band of the frequency band.

7. The method according to claim 1, wherein the receiving an excitation signal further comprises at least one of:
determining, according to first signaling, a frequency band where the excitation signal is located from the first frequency band and the second frequency band and/or a frequency domain position where the excitation signal is located, and receiving the excitation signal in the frequency band and/or the frequency domain position;
determining the frequency band where the excitation signal is located, at least according to the frequency band where the second signal is located;
determining that a frequency-domain interval between the excitation signal and the second signal is a sixth interval;
determining that a frequency-domain interval between the excitation signal and a first reference point/a second reference point is less than a seventh interval; or
determining that the excitation signal corresponds to one or more frequency domain positions;
wherein the sixth interval and the seventh interval are respectively determined according to at least one of: a fixed value, a preset value, a type of the first node, an energy acquisition manner of the first node, a coverage capability of the first node, a type of region where the excitation signal is located, a type of region where the second signal is located, a position of the first frequency band, a position of the second frequency band, or a transmission mode based on the second signal.

8. The method according to claim 7, wherein the first signaling comprises at least one of: higher layer signaling, or signaling carried in the first signal.

9. The method according to claim 3, 5 or 7, wherein the first reference point is any one of: an in-band edge frequency point of the first frequency band, a fixed frequency point within the first frequency band, a middle frequency point of a guard band of the first frequency band, an edge frequency point of the guard band of the first frequency band, a frequency point determined based on signaling and located in the first frequency band, or the first signal/second signal/excitation signal located in the first frequency band.

10. The method according to claim 3, 5 or 7, wherein the second reference point is any one of: an in-band edge frequency point of the second frequency band, a fixed frequency point in an in-band of the second frequency band, a middle frequency point of a guard band of the second frequency band, an edge frequency point of the guard band of the second frequency band, a frequency point determined based on signaling and located in the second frequency band, or the first signal/second signal/excitation signal located in the second frequency band.

11. The method according to claim 1, wherein a bandwidth of the first signal is M times that of the excitation signal, M being an integer greater than zero.

12. The method according to claim 1, wherein the first signal and the excitation signal overlap in a time domain and/or a frequency domain.

13. The method according to claim 1, wherein the receiving the first signal and/or the excitation signal further comprises:
receiving the first signal transmitted by a second node; and
receiving the excitation signal transmitted by the second node or a third node.

14. The method according to claim 1, further comprising:
obtaining second signaling; wherein the second signaling is used to indicate at least one of: a device type, a device capability, a coverage capability, a frequency-domain position corresponding to the second signal, a transmission mode of the second signal, whether to perform power amplifier amplification, whether to perform power amplification, a modulation mode, or a coding mode.

15. The method according to claim 14, wherein the second signaling is carried in a frame header of the first signal, a control field of the first signal, a data field of the first signal, a medium access control (MAC) control element (CE), or a radio resource control (RRC) signaling.

16. The method according to claim 1, wherein a transmission power of the excitation signal or the first signal is determined according to at least one of: a preset value, a configuration value based on signaling, a device type of the first node, a coverage capability of the first node, a receiver type of the first node, or a received second signal strength.

17. The method according to claim 1, wherein the transmitting a second signal based on the first signal and/or the excitation signal further comprises at least one of:
when the second signal and the excitation signal are in the same frequency band, one or more frequency domain positions corresponding to the second signal are all lower than a frequency domain position corresponding to the excitation signal;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal;
the number of frequency domain positions corresponding to the second signal within a guard band of the frequency band is less than the number of frequency domain positions corresponding to the second signal within an in-band of the frequency band;
when the second signal and the excitation signal are in the same frequency band, one or more frequency domain positions corresponding to the second signal are determined at least according to one or more frequency domain positions corresponding to the excitation signal;
determining the frequency domain position where the second signal is located, at least according to a cell index; or
determining the frequency domain position where the second signal is located, at least according to signaling;
wherein the second signal is a backscatter signal corresponding to the excitation signal.

18. The method according to claim 1, wherein the transmitting the second signal based on the first signal and/or the excitation signal further comprises at least one of:
a frequency band where the second signal is located is the same as that where the excitation signal is located;
a frequency domain position corresponding to the second signal is the same as that corresponding to the excitation signal;
the frequency band where the second signal is located is a second frequency band;
the frequency domain position corresponding to the second signal is the same as that corresponding to a backscatter signal corresponding to the excitation signal;
a time domain position corresponding to the second signal is determined at least according to a time domain position of the first signal;
when the first signal and the second signal are in a Time Division Duplex (TDD) frequency band, an uplink/downlink configuration corresponding to the TDD is determined at least according to the transmission of the first signal and the second signal; or
the frequency band where the second signal is located is the same as that where the first signal is located;
wherein the second signal is a signal actively generated by the first node.

19. The method according to claim 1, wherein a relationship between the first signal and the second signal satisfies the following:
determining a first parameter corresponding to the second signal at least according to a first parameter corresponding to the first signal, wherein the first parameter comprises at least one of: a symbol length, a subcarrier spacing, a cyclic prefix, a time domain length, or a number of subcarriers.

20. The method according to claim 1, wherein a frequency domain position of the first signal, the second signal, or the excitation signal is located at any one of:
the first n PRBs of the frequency band;
the last n PRBs of the frequency band;
n PRBs within a guard band immediately adjacent to the first PRB in the frequency band;
n PRBs within a guard band immediately adjacent to the last PRB in the frequency band;
n PRBs including n1 PRBs within the guard band of the frequency band and n2 PRBs within an in-band of an adjacent frequency band, where n, n1, n2 are positive integers.

21. A signal transmission method, applied to a second node, comprising:
transmitting a first signal and/or an excitation signal to a first node; and
receiving a second signal transmitted by the first node in response to the first signal and/or the excitation signal.

22. The method according to claim 21, wherein the first signal is located in a first frequency band, and the second signal is located in a second frequency band.

23. The method according to claim 21, wherein the first signal and the second signal are located in a first frequency band.

24. The method according to claim 22, wherein the transmitting an excitation signal further comprises at least one of:
determining, according to first signaling, a frequency band where the excitation signal is located from the first frequency band and the second frequency band and/or a frequency domain position where the excitation signal is located, and transmitting the excitation signal in the frequency band and/or the frequency domain position;
determining the frequency band where the excitation signal is located, at least according to the frequency band where the second signal is located;
determining that a frequency-domain interval between the excitation signal and the second signal is a sixth interval;
determining that a frequency-domain interval between the excitation signal and a first reference point/a second reference point is less than a seventh interval; or
determining that the excitation signal corresponds to one or more frequency domain positions;
wherein the sixth interval and the seventh interval are respectively determined according to at least one of: a fixed value, a preset value, a type of the first node, an energy acquisition manner of the first node, a coverage capability of the first node, a type of region where the first signal is located, a type of region where the second signal is located, a position of the first frequency band, a position of the second frequency band, or a transmission mode based on the second signal.

25. The method according to claim 22, wherein a bandwidth of the first signal is M times that of the excitation signal, M being an integer greater than zero.

26. The method according to claim 22, wherein the first signal and the excitation signal overlap in a time domain and/or a frequency domain.

27. The method according to claim 21, wherein second signaling acquired by the first node is used to indicate at least one of: a device type, a device capability, a coverage capability, a frequency-domain position corresponding to the second signal, a transmission mode of the second signal, whether to perform power amplifier amplification, whether to perform power amplification, a modulation mode, or a coding mode.

28. The method according to claim 27, wherein the second signaling is carried in a frame header of the first signal, a control field of the first signal, a data field of the first signal, a medium access control (MAC) control element (CE), or a radio resource control (RRC) signaling.

29. The method according to claim 21, wherein a transmission power of the excitation signal or the first signal is determined according to at least one of: a preset value, a configuration value based on signaling, a device type of the first node, a coverage capability of the first node, a receiver type of the first node, or a received second signal strength.

30. The method according to claim 21, wherein the second signal transmitted by the first node in response to the first signal and/or excitation signal further comprises at least one of:
when the second signal and the excitation signal are in the same frequency band, one or more frequency domain positions corresponding to the second signal are all lower than a frequency domain position corresponding to the excitation signal;
when the second signal and the excitation signal are in the same frequency band, one or more frequency domain positions corresponding to the second signal are all higher than the frequency domain position corresponding to the excitation signal;
when the second signal and the excitation signal are in the same frequency band, one or more frequency domain positions corresponding to the second signal do not include the frequency domain position corresponding to the excitation signal;
the number of frequency domain positions corresponding to the second signal within a guard band of the frequency band is less than the number of frequency domain positions corresponding to the second signal within an in-band of the frequency band;
when the second signal and the excitation signal are in the same frequency band, one or more frequency domain positions corresponding to the second signal are determined at least according to one or more frequency domain positions corresponding to the excitation signal;
determining the frequency domain position where the second signal is located, at least according to a cell index; or
determining the frequency domain position where the second signal is located, at least according to signaling;
wherein the second signal is a backscatter signal corresponding to the excitation signal.

31. The method according to claim 21, wherein the second signal transmitted by the first node in response to the first signal and/or the excitation signal further comprises at least one of:
a frequency band where the second signal is located is the same as that where the excitation signal is located;
a frequency domain position corresponding to the second signal is the same as that corresponding to the excitation signal;
the frequency band where the second signal is located is a second frequency band;
the frequency domain position corresponding to the second signal is the same as that corresponding to a backscatter signal corresponding to the excitation signal;
a time domain position corresponding to the second signal is determined at least according to a time domain position of the first signal;
when the first signal and the second signal are in a Time Division Duplex (TDD) frequency band, an uplink/downlink configuration corresponding to the TDD is determined at least according to the transmission of the first signal and the second signal; or
the frequency band where the second signal is located is the same as that where the first signal is located;
wherein the second signal is a signal actively generated by the first node.

32. The method according to claim 21, wherein a frequency domain position of the first signal, the second signal, or the excitation signal is located at any one of:
the first n PRBs of the frequency band;
the last n PRBs of the frequency band;
n PRBs within a guard band immediately adjacent to the first PRB in the frequency band;
n PRBs within a guard band immediately adjacent to the last PRB in the frequency band;
n PRBs including n1 PRBs within the guard band of the frequency band and n2 PRBs within an in-band of an adjacent frequency band, where n, n1, n2 are positive integers.

33. A communication device, comprising: a processor and a memory for storing processor-executable instructions;
wherein the processor is configured to execute the instructions to cause the communication device to perform the signal transmission method according to any of claims 1-32.

34. A computer-readable storage medium, wherein the computer-readable storage medium has computer instructions stored thereon, which cause a communication device to perform the signal transmission method according to any of claims 1-32.
